# DEMANDE DE BREVET EUROPEEN

(11) **EP 1 041 049 A1**
(43) Date de publication de la demande: **04.10.2000**
(21) Numéro de dépôt: 00400120.2
(22) Date de dépôt: 18.01.2000
(51) Int. Cl.: C03C 1/00, C03C 1/02, B09B 3/00

(54) **Conditionnement de poussières de filtres et vitrification de ces poussières ainsi conditionnées**

(30) Priorité: 31.03.1999 FR 9904027
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Starck, Stephan, 95310 St. Ouen l'Aumone (FR); Levert, Daniel, 95320 St. Leu la Foret (FR)
(74) Mandataire: Vesin, Jacques

(57) **Abrégé**

L'invention concerne un procédé de conditionnement de poussières de filtres provenant notamment de l'incinération de déchets, en particulier de déchets d'ordures ménagères, consistant à soumettre lesdites poussières de filtres à une étape de granulation en présence d'un liant.

Le liant est de préférence un liant de type réactif tel qu'un lait de chaux.

L'invention concerne également un perfectionnement aux procédés de vitrification de poussières de filtres provenant de l'incinération de déchets, en particulier d'ordures ménagères, comprenant une étape de granulation desdites poussières.

## Description

L'invention concerne un procédé de conditionnement de poussières de filtres provenant notamment de l'incinération de déchets, en particulier de déchets d'ordures ménagères ainsi qu'un procédé perfectionné de vitrification de ces poussières incorporant, à titre d'étape préliminaire, ce procédé de conditionnement.

Par poussières de filtres, on entend les poussières recueillies dans les systèmes de filtration d'installations industrielles. Les systèmes de filtration sont généralement constitués de filtres électrostatiques ou de filtres à manches.

Les poussières de filtres, souvent désignées par cendres volantes récupérées sur les filtres des incinérateurs de déchets, en particulier dans le cas de l'incinération des ordures ménagères, sont des produits pulvérulents contenant des quantités suffisantes de métaux lourds, tels que arsenic, cadmium, mercure, plomb, pour poser des problèmes de mise en décharge.

La vitrification des déchets contenant les métaux lourds est une technique bien connue visant à les rendre pratiquement inertes aux effets de la lixiviation qui peut se rencontrer dans les décharges.

La vitrification permet de rendre le produit initialement toxique suffisamment inerte pour pouvoir être déposé dans une décharge non classée. Elle permet également de l'employer ultérieurement comme ballast ou dans un mélange de ciment.

La vitrification des déchets contenant des métaux toxiques commence à être utilisée industriellement dans différents pays, en particulier en France et au Japon.

La vitrification peut être réalisée par différentes techniques thermiques qui mettent en oeuvre notamment des flammes, des plasmas, des arcs électriques.

Différentes tentatives de vitrification directe des poussières de filtres ont été réalisées, notamment dans des fours rotatifs. Toutefois, cette vitrification se heurte à des difficultés liées à la nature même du produit traité qui est particulièrement pulvérulent et réactif. L'homme du métier se trouve donc confronté dans le cas où il cherche à vitrifier ces poussières à différents problèmes liés :
1°. A leur très forte réactivité thermique,
2°. A un envol de matières dans le système de traitement des fumées.

La forte réactivité des poussières de filtres rend la vitrification très instable thermiquement et les envols de poussière dégradent le rendement massique de l'opération de vitrification.

Les inventeurs de la présente invention ont maintenant trouvé une solution permettant de surmonter simultanément ces deux inconvénients. Cette solution leur permet d'éviter tout risque d'instabilité lors de la mise en oeuvre de la vitrification et d'améliorer considérablement le rendement de la vitrification.

La solution proposée consiste à agglomérer les poussières de filtres sous forme de granulés par addition d'un liant. Cette solution, outre le fait qu'elle permet de surmonter les inconvénients ci-dessus présente l'avantage d'être particulièrement économique, tant en ce qui concerne les matières premières supplémentaires nécessaires que les quantités d'énergie mises en oeuvre.

Par ailleurs, un avantage de l'invention est qu'elle n'induit pas d'augmentation sensible de la masse du produit à vitrifier.

Par ailleurs, un autre avantage de l'invention est qu'elle conduit à un produit de vitrification dont les qualités ne se trouvent pratiquement pas affectées par l'introduction du liant nécessaire à la granulation et qui présentent donc tous les avantages du produit direct de vitrification des poussières de filtres, tant pour sa mise en décharge que pour son éventuel valorisation industrielle.

Plus précisément, les inventeurs de la présente invention ont mis au point une méthode originale de granulation de poussières de filtres et ont démontré l'absence quasi-totale de réactivité thermique et d'envol de matières pulvérulentes dans un procédé de vitrification du produit granulé.

L'invention porte donc principalement sur une méthode de conditionnement originale des poussières de filtres de fumées d'usines d'incinération de déchets, en particulier d'ordures ménagères, qui résout les deux difficultés majeures évoquées ci-dessus lors du traitement ultérieur de vitrification.

L'invention peut également être appliquée à d'autres types de poussières de filtres présentant un risque pour l'environnement et dont on peut envisager la vitrification.

L'invention vise également une méthode simple, peu coûteuse, et apte à former un produit vitrifiable fluide et chimiquement peu agressif pour les réfractaires des fours de vitrification.

Plus précisément, selon une de ses caractéristiques essentielles, l'invention concerne un procédé de conditionnement de poussières de filtres, notamment de poussières de filtres provenant de l'incinération de déchets, en particulier de déchets d'ordures ménagères, selon lequel on soumet lesdites poussières de filtres à une étape de granulation en présence d'un liant.

Bien que le procédé de l'invention s'applique essentiellement à la granulation directe des poussières recueillies sur les filtres, il n'est pas exclu, notamment avec pour optique d'améliorer les conditions de vitrification, de mélanger ces poussières à un produit ci-après désigné par adjuvant de vitrification destiné à régler la fluidité et/ou le comportement chimique du vitrifiat vis-à-vis des réfractaires des fours de vitrification dans lesquels la vitrification de ces granulats est ensuite réalisée.

A titre d'exemple de tels adjuvants de vitrification, on citera, par exemple, le carbonate de calcium ou le mâchefer pulvérisé.

Ces adjuvants de vitrification sont avantageusement sous forme pulvérulente et présentent des granulométries de l'ordre de celles des poussières traitées.

Ces adjuvants de vitrification sont incorporés en mélange avec les poussières de filtres, à raison d'au plus 20 % en poids par rapport au poids desdites poussières lors de l'étape de granulation.

La granulation peut être réalisée par tout procédé classique de granulation. Ce procédé de granulation est avantageusement mis en oeuvre dans un dispositif à cuve rotative et/ou sous l'action d'un tourbillon rotatif.

Selon une variante particulièrement avantageuse de l'invention, la granulation est effectuée par malaxage, permettant de compacter les poussières pulvérulentes sous forme de granulés. Cette étape de granulation sera avantageusement réalisée dans un malaxeur avec tourbillon travaillant dans une cuve tournant dans le sens contraire dudit tourbillon.

Dans le procédé de granulation de l'invention, le liant, suivant sa nature, agit soit à la manière d'une simple colle permettant l'adhésion des particules pulvérulentes entre elles soit, selon une variante particulièrement avantageuse comme activateur de la surface des particules pulvérulentes qui sont amenées à adhérer entre elles sous l'application de la force exercée au sein du granulateur.

La granulation est avantageusement réalisée dans un malaxeur à cuve tournante. Elle peut toutefois être réalisée dans un malaxeur à disque ou un granulateur en processus continu.

Le liant utilisé pour la formation des granulés selon l'invention pourra être tout liant de type organique ou minéral susceptible d'agglomérer entre elles les poussières de filtres.

Selon une première variante, il pourra, en particulier, s'agir d'un liant de type organique, par exemple une colle dérivée de la cellulose, une résine époxy, furannique, phénolique ou acrylique.

Toutefois, selon une variante particulièrement avantageuse de l'invention, on choisira un liant de type minéral, en particulier une argile telle que le kaolin ou la bentonite, un liant de type silicate alcalin ou une lessive de soude, de potasse ou de chaux.

On choisira, de préférence, un liant alcalin de type réactif. Ce liant sera choisi en fonction de la composition des poussières. Ainsi, dans la mesure où les poussières provenant des incinérateurs ont généralement une teneur importante en silicate, on pourra choisir un liant de type silicate alcalin. D'une façon préférée, lorsque les poussières ont une teneur suffisante en calcium on choisira un liant sous forme de lessive, de préférence une solution de Ca(OH)₂, de NaOH ou de KOH.

La quantité de liant introduit dans l'étape de granulation dépend, bien entendu, de la nature du liant et des poussières de filtres mais aussi de la dimension visée pour les granulés.

La quantité de liant et les conditions de granulation, en particulier de malaxage, seront choisies de façon à ce que les dimensions des granulés soient comprises entre 0,5 et 30 mm, de préférence comprises entre 1 et 15 mm, dimensions qui sont particulièrement adaptées au procédé ultérieur de vitrification.

Les granulés de l'invention sont avantageusement préparés de la façon suivante : on introduit les poussières de filtres dans le granulateur, on mouille la surface de ces poussières avec une quantité minimale de liant, quantité qui doit être adaptée de façon à supprimer la volatilité des poussières. Cette quantité de liant est avantageusement appliquée par pulvérisation, ce qui garantit une distribution uniforme du liant et évite la formation d'une pâte au sein de la masse de poussières traitées.

Le processus de granulation peut être soit continu, soit discontinu, en fonction du principe de fonctionnement du granulateur sélectionné.

Toutefois, on utilisera de préférence un processus continu.

Dans le cas des liants réactifs, et c'est le cas en particulier lors de l'utilisation d'une lessive, la réaction ne se forme en général pas instantanément. Il faudra donc contrôler cette addition de liant en fonction du type de réaction qui se produit.

La taille souhaitée des granulés est obtenue en ajustant le rapport pondéral entre le liant et les poussières de filtres.

Les proportions totales de liant et de poussières de filtres à introduire dans l'étape de granulation dépendent, bien entendu, de la nature du liant. Toutefois, dans le cas où on utilise une lessive de chaux, il est particulièrement avantageux d'utiliser une lessive contenant de 0,02 à 0,15 % en matière sèche, de préférence une lessive contenant environ 0,1 % de matière sèche. Dans ce cas, les granulés sont obtenus en utilisant de 20 % à 50 %, de préférence environ 30 % en poids de liant en poids par rapport au poids des poussières de filtres, ce qui correspond à une quantité de liant exprimée en masse sèche représentant 0,01 à 0,20 %, de préférence 0,02 à 0,08 %, par rapport à la masse desdites poussières de filtres dans le granulé sec.

Selon une variante particulièrement intéressante du procédé de l'invention, le procédé de granulation est réalisé en continu.

Une étape de séchage est ensuite avantageusement réalisée à la sortie du dispositif de granulation. Ce séchage peut être effectué par tout procédé classique, en particulier en utilisant de l'air chaud ou des gaz chauds, en particulier des fumées issues du procédé de vitrification, comme exposé ci-après.

Le procédé de granulation de l'invention permet d'aboutir à des granulés qui peuvent être vitrifiés dans tout dispositif de vitrification classiquement utilisé.

Ainsi, selon une autre de ses caractéristiques essentielles, l'invention concerne un perfectionnement aux procédés connus de vitrification des poussières de filtres, notamment des poussières de filtres provenant de l'incinération de déchets, en particulier d'ordures ménagères, selon lequel on réalise une étape préliminaire de granulation telle que définie précédemment, suivie éventuellement d'une étape de séchage des granulés, avant de procéder à l'étape de fusion dans un four de vitrification.

Cette étape de vitrification peut être réalisée dans tout dispositif classique de vitrification, en particulier dans un four électrique ou dans un four à arc ou dans un four à torche de plasma ou à électrode immergée.

Elle est de façon particulièrement avantageuse réalisée dans un four équipé de brûleurs, de préférence de brûleurs à l'oxygène alimenté en combustibles tels que gaz naturel, propane ou fioul.

Un tel four pourra être soit un four statique, soit un four rotatif.

On utilisera de préférence selon l'invention un four rotatif pour l'étape de vitrification.

Il s'agira avantageusement d'un four qui comprend une partie centrale cylindrique. Dans un tel four, des chemins de roulement entourent généralement la partie centrale du four au voisinage de ses extrémités, ce qui permet, par coopération avec des galets, d'entraîner le four en rotation autour de son axe.

Les granulés formés dans l'étape préalable du procédé sont introduits dans le four préférentiellement au voisinage du brûleur. En fonctionnement, le four est porté à une température constante permettant la vitrification. Cette température est généralement de l'ordre de 1 350 ± 100°C. Le soutirage du produit liquide de vitrification est opéré régulièrement.

Selon une variante particulièrement intéressante où le four est en rotation permanente, le soutirage est réalisé en continu.

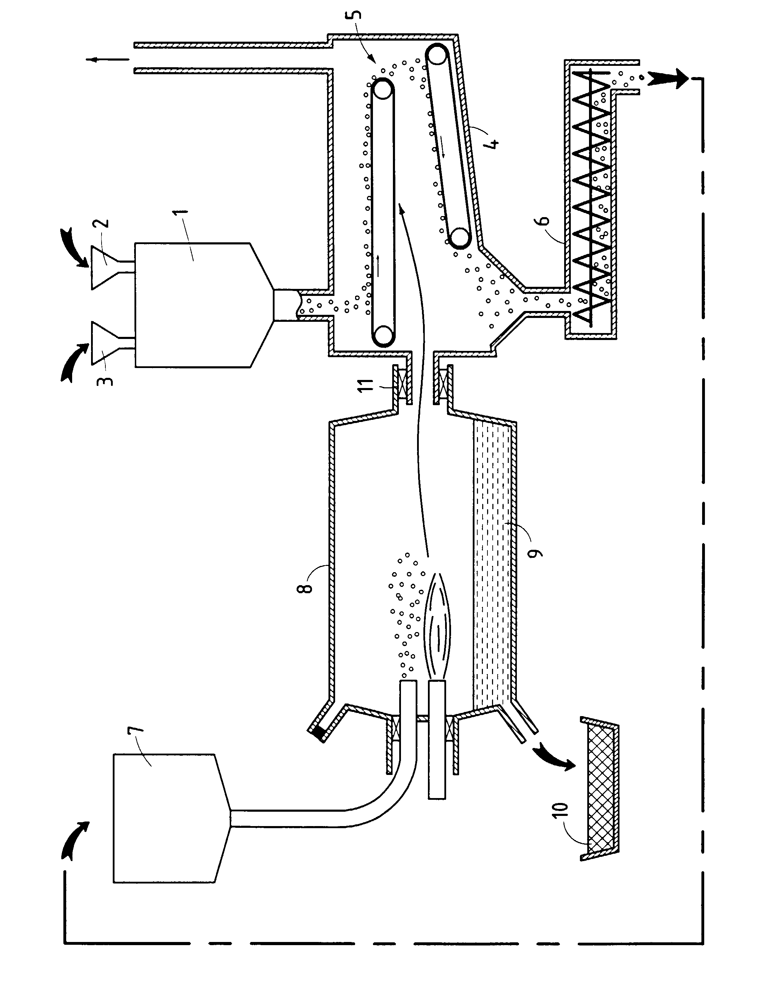

Selon une variante particulièrement avantageuse de l'invention, les installations de granulation et de vitrification du produit granulé peuvent être installées sur le même site, ce qui permet, en particulier, d'utiliser l'énergie libérée lors de l'étape de vitrification et, plus précisément, les fumées du brûleur pour réaliser l'étape de séchage des granulés. Un exemple d'une telle installation se trouve représenté sur la figure unique ci-jointe.

On décrit ci-après un mode complet de réalisation du procédé de vitrification selon l'invention incorporant l'étape préliminaire de granulation en référence à cette figure.

Les poussières de filtres et le liant, initialement stockés dans les réservoirs 2 et 3, sont introduits dans le dispositif de granulation 1. Les granulés après leur fabrication sont introduits dans un séchoir 4 où ils viennent s'accumuler sur un tapis roulant 5 où ils séjournent pendant un temps suffisant pour assurer le séchage et le durcissement des grains. Puis, les granulés sont évacués du dispositif de séchage. Ils sont transportés, par exemple par un dispositif 6 de transport mécanique ou pneumatique vers le dispositif de stockage des granulés 7, puis introduits dans le four 8 à proximité du brûleur oxygène-combustible. Les granulés sont alors fondus au sein du four pour conduire à la formation d'un liquide 9 qui peut être évacué en continu ou en discontinu du four et recueilli dans le récipient 10.

Le four 8 est avantageusement un four en rotation permanente ou alternative et le soutirage du produit fondu est alors fait en continu ou en séquentiel.

Dans l'installation représentée sur la figure, ce sont les fumées issues du four qui assurent le chauffage de l'air contenu dans le dispositif de séchage, permettant ainsi une notable économie d'énergie.

L'exemple qui suit illustre de façon non limitative la présente invention.

### EXEMPLE

La poussière d'incinération utilisée selon cet exemple présente la composition chimique suivante, exprimée en pourcentage en poids :
- SiO₂ : 34,2
- Al₂O₃ : 17,4
- Fe₂O₃ : 2,1
- MnO : 0,2
- MgO : 3,6
- CaO : 26,4
- Na₂O :4,1
- K₂O : 4,2
- Cl : 6,8
- SO₃ : 4,2
- P₂O₅ : 2,0.

La densité apparente de cette poussière est de 0,43 g/cm³.

Le liant utilisé est une solution saturée de CaO dans l'eau froide contenant 0,94 g/l de Ca2+, soit environ 1,33 g/l de CaO.

La granulation est effectuée dans un malaxeur avec tourbillon à doigt travaillant avec une cuve tournant en sens contraire du tourbillon. Les axes de la cuve et du tourbillon sont parallèles et inclinés par rapport à la verticale. L'axe du tourbillon est légèrement décalé par rapport à l'axe de la cuve.

Le tableau 1 ci-dessous donne les conditions et les résultats (grosseur des grains) obtenus dans le cas de 3 essais notés 1, 2 et 3 dans ce tableau.

**TABLEAU 1**

| No. d'essai | 1 | 2 | 3 |
|---|---|---|---|
| masse de poussière (g) | 300,0 | 300,0 | 18 000 |
| liant (g) | 87,7 | 76,8 | 4 900 |
| liant/cendres (% en poids) | 29,2 | 25,6 | 27,2 |
| grosseur des grains (mm) | 3 à 15 | 1 à 10 | 1 à 20 |

Après l'étape de granulation, on réalise une étape de séchage de la façon suivante :

Après séchage à l'air, on soumet ensuite les grains à un séchage de 1 h à 120°C, puis de 1 h à 250°C.

Après le séchage à 250°C, on constate que les grains sont très résistants et supportent sans se fissurer et sans éclater des chocs thermiques et mécaniques importants, en particulier des chocs thermiques à des température de l'ordre de 1 000°C.

## Revendications

1. Procédé de conditionnement de poussières de filtres, notamment de poussières de filtres provenant de l'incinération de déchets, en particulier de déchets d'ordures ménagères, caractérisé en ce qu'il consiste à soumettre lesdites poussières de filtres à une étape de granulation en présence d'un liant.

2. Procédé selon la revendication 1, caractérisé en ce que lesdites poussières de filtres sont préalablement mélangées à des quantités pouvant aller jusqu'à 20 % en poids par rapport au poids desdites poussières d'un adjuvant de vitrification sous forme pulvérulente.

3. Procédé selon l'une des revendications 1 ou 2, caractérisé en ce que la granulation est réalisée dans un dispositif à cuve rotative et/ou sous l'action d'un tourbillon rotatif.

4. Procédé selon l'une des revendications 1 ou 2, caractérisé en ce que l'étape de granulation est réalisée dans un malaxeur avec tourbillon, travaillant dans une cuve tournant en sens contraire dudit tourbillon.

5. Procédé selon l'une des revendications 1 à 4, selon lequel les granulés présentent des dimensions comprises entre 0,5 et 30 mm, de préférence entre 1 et 15 mm.

6. Procédé selon l'une des revendications 1 à 5, caractérisé en ce que le liant est un liant de type organique, par exemple une colle dérivée de la cellulose ou une résine époxy, furannique, phénolique ou acrylique.

7. Procédé selon l'une des revendications 1 à 5, caractérisé en ce que le liant est un liant de type minéral, en particulier une argile telle que le kaolin ou la bentonite, un liant de type silicate alcalin ou une lessive de soude, de potasse ou de chaux.

8. Procédé selon l'une des revendications 1 à 5 ou 7, caractérisé en ce que ledit liant est une lessive de chaux.

9. Procédé selon la revendication 8, caractérisé en ce que la granulation est réalisée en présence d'une quantité de liant exprimée en masse sèche représentant 0,01 à 0,20 %, de préférence 0,02 à 0,08 %, par rapport à la masse desdites poussières de filtres dans le granulé sec.

10. Procédé selon l'une des revendications 8 ou 9, caractérisé en ce que la granulation est réalisée en présence de 20 à 50 % d'un lait de chaux contenant une teneur en matière sèche de l'ordre de 0,02 à 0,15 % en poids.

11. Procédé selon l'une des revendications 1 à 10, caractérisé en ce que ladite étape de granulation est réalisée en continu.

12. Procédé selon l'une des revendications 1 à 11, caractérisé en ce qu'il comprend en outre une étape de séchage des granulés.

13. Perfectionnement aux procédés de vitrification de poussières de filtres, notamment de poussières de filtres provenant de l'incinération de déchets, en particulier d'ordures ménagères, caractérisé en ce qu'il comprend une étape préalable de granulation desdites poussières selon l'une des revendications 1 à 12.

14. Procédé selon la revendication 13, caractérisé en ce que ladite étape de vitrification est réalisée dans un four rotatif.

15. Procédé selon l'une des revendications 13 ou 14, caractérisé en ce que les fumées formées lors de l'étape de vitrification sont utilisées pour assurer le séchage des granulés avant ladite étape de vitrification.
